# EUROPÄISCHE PATENTANMELDUNG

(11) **EP 2 815 640 A1**
(43) Veröffentlichungstag der Anmeldung: **24.12.2014**
(21) Anmeldenummer: 14172872.5
(22) Anmeldetag: 18.06.2014
(51) Int. Cl.: A01G 13/02

(54) **Schutznetzbahn für Witterungsschutzvorrichtung für Pflanzenkulturen, insbesondere für Obstbäume, sowie Witterungsschutzvorrichtung mit Netz**

(30) Priorität: 20.06.2013 CH 11592013
(71) Anmelder: Quality Enterprises Establishment, 9490 Balzers (LI)
(72) Erfinder: Federspiel, Walter, 9475 Sevelen (CH)
(74) Vertreter: Riederer Hasler & Partner Patentanwälte AG

(57) **Zusammenfassung**

Dargestellt und beschrieben ist eine Schutznetzbahn für Witterungsschutzanlagen mit einer ersten Längsseite (13) und einer zweiten Längsseite (15), welche sich erfindungsgemäss dadurch auszeichnet, dass zwischen der ersten und der zweiten Längsseite (13, 15) in Längsrichtung der Schutznetzbahn eine längsgerichtete Verstärkung (21) verläuft und innerhalb der längsgerichteten Verstärkung eine Vielzahl von voneinander in Längsrichtung beabstandeten Entleerungsöffnungen (23) angelegt ist. Durch die Entleerungsöffnungen können Hagelkörner vom Netz abrutschen, wodurch sich das Netz entleert. Die Anlage der Entleerungsöffnungen ist insbesondere vorteilhaft, weil dadurch eine Schutznetzbahn an den Pfeilern bzw. an deren Längsverspannung paralleler Pflanzurtgsreihen den Pflanzungsrehenzwischenraum überspannend aufgezogen bzw. befestigt werden können, ohne dass es nötig wäre nachträglich Schutznetzbahnen pflanzungsreihenmittig zu verklemmen oder zu vernähen. Im Weiteren sind eine Witterungsschutzanlage mit Schutznetz sowie ein Verfahren zur Montage eines Schutznetzes beschrieben.

## Beschreibung

### TECHNISCHES GEBIET DER ERFINDUNG

Das Gebiet der Erfindung umfasst eine Schutznetzbahn für Witterungsschutzvorrichtungen zur Überdachung von Pflanzenkulturen, insbesondere für Obstbäume und Beeren, zum Schutz gegen Witterungseinflüsse wie Hagel, Sonneneinstrahlung und/oder zum Schutz gegen Insekten.

Im Weiteren Betrifft die Erfindung eine Witterungsschutzvorrichtung mit Schutznetz, welches aus Netzbahnen zusammengesetzt ist. Die Erfindung betrifft zudem ein neues Montageverfahren für Schutznetze. Zudem stellt die Erfindung ein Verfahren zur Entleerung von Schutznetzen von Witterungsschutzvorrichtungen bereit.

### HINTERGRUND DER EREINDUNG

Witterungsschutznetze dienen vor allem dem Schutz vor Hagelschlag. Dafür werden die Netze in langen Bahnen mittels Stützen und Seilverspannungen von Witterungsschutzanlagen über Kulturpflanzungen aufgespannt. Übliche Schutzbahnen werden Entlang von Pflanzungsreihen über die Pfeiler und Längsverspannung je einer Pflanzungsreihe gelegt und links und rechts der Pflanzungsreihe mit der Schutznetzbahn der benachbarten Pflanzungsreihe verbunden. Verbindungen sind üblicherweise punktuell an einer Vielzahl voneinander regelmässig beabstandeten Stellen, mittig der Pflanzungsreihen über die gesamte Länge der Pflanzungsreihe angebracht, d.h. ungefähr mittig zum Korridor zwischen den Pflanzungsreihen. Dadurch hängen die miteinander verbundenen Bahnränder ungefähr in der Mitte zweier Pflanzungsreihen und zwar tiefer als der Netzbereich zwischen den beiden Längsseitigen Rändern der Schutznetzbahn. Hagel der vom Netz aufgefangen wird, sammelt sich an der Verbindungslinie benachbarter Bahnen und fällt zwischen jeweils zwei punktuellen Verbindungen durch auf den Boden. Die Pflanzen der Pflanzungsreihe sind somit vom Hagel geschützt; gleichzeitig können die Hagelkörner abrutschen bzw. entleeren.

Probleme treten oft beim Entleeren des Netzes bei Hagelschlag auf. Aufgespannte Schutznetze fallen für gewöhnlich von der Pfeilerreihe zur Mitte der Fahrgasse zwischen zwei Pfeilerreihen ab. Für gewöhnlich geschieht dadurch die Entleerung über den Netzrand in die Gassenmitte. Nachteiligerweise können sich zum Beispiel Sackvertiefungen im Netz bilden, in welchen sich Hagelkörner sammeln. Aufgrund des zusätzlichen Gewichts, welches auf dem Netz liegt, kann eine Ansammlung von Hagelkörnern zu Schäden im Netz führen. Gleichzeitig wird bei Durchbruch der Hagelkörner an ungünstiger Stelle durch das Netz die Bepflanzung geschädigt. Zudem, insbesondere bei Hagelschutznetzen, welche eine relativ starke Neigung aufweisen, kann es beim Entleeren zu Streuschäden kommen, indem die abfallenden Hagelkörner, je nach Abrutschgeschwindigkeit von der Korridormitte her kommend aufgrund eines horizontalen Rutschgeschwindigkeitsanteils schräg abfallen, dadurch seitlich in die Pflanzung schiessen und dabei Schäden in der Pflanzung verursachen.

Nachteilig ist im Weiteren die aufwendige Montage der Netzbahnen. Die Netze müssen gleichmässig über die Längsverspannungen gelegt und gezogen werden, möglichst ohne dieses an den Pfeilerspitzen zu verletzen. Das Verbinden der Netzbahnränder gestaltet sich aufwendig, da erst beide Ränder gefasst werden müssen, um diese dann miteinander zu verbinden. Hierfür werden üblicherweise vierteilige Klammern verwendet, wobei jeweils ein zweiteiliger Teil der Klammer an zwei zu verbindende Randstellen zweier benachbarter Bahnen fixiert wird und danach die beiden zweiteiligen Klammerteile miteinander verklemmt werden, um ein Netzdach zu bilden.

Die Offenlegungsschrift DE 10 2009 047 383 zeigt Wetterschutzüberdachungsnetze, welche in dachförmiger Anordnung über den First gelegt werden und an ihren einander paarweise benachbarten Längsrändern über Verbindungsmittel zwischen den Pflanzenreihen miteinander verbunden werden, wobei eine Dachtraufe entsteht, die in ihren verbindungsfreien Zwischenbereichen für die Ableitung von Hagelkörnern offen ist. Diese Art von Wetterschutzvorrichtung kann nur unter hohem Arbeitsaufwand geöffnet und zur Seite gerollt werden.

Offenbarung DE 103 49 243 zeigt eine Profilschiene mit Kedersystem zur Verwendung als Firstelement für eine Wetterschutzvorrichtung mit zwischen benachbarten Pfostenreihen frei hängenden Wetterschutz-Flächenelementen. Hagel wird über dafür bestimmte Passagen abgeleitet. Diese Art von Wetterschutzvorrichtung ist ungünstig bei Hanglagen und bei hügeligem Gelände.

Die Offenbarung FR 2087620 zeigt ein engmaschiges, imprägniertes Schutznetz, dessen Imprägnierung Pflanzenschutzwirkstoffe enthält und wasserlöslich ist. Vom Netz abtropfendes Wasser transportiert die Wirksubstanzen auf die Pflanze. Hagel wird über dafür bestimmte Passagen abgeleitet.

Im Weiteren wird in der Patentschrift US 2,844,915 eine einfache Frostschutzfolienabdeckung mit Feuchtigkeitsauslasspassagen für Reihenbepflanzungen wie z.B. Erdbeeren vorgestellt. In der Offenlegungsschrift WO 03/067964 A1 wird weiter ein Folienabdecksystem für Weinbepflanzungen zum Ableiten von Regenwasser gezeigt. In der Offenlegungsschrift WO 2012/008859 A2 wird der Abfluss von Regenwasser über ein Gewebefolie auf das Pflanzenzentrum reguliert. Folienabdecksysteme und folienartige Abdecksysteme haben insgesamt eine andere Schutzfunktion als Netzabdeckungen.

### AUFGABE

Es ist Aufgabe der vorliegenden Erfindung die vorgenannten Nachteile des Stands der Technik zu beheben oder zumindest zu verringern. Weiter ist es Aufgabe die Entleerung eines Witterungsschutznetzes bei Hagel zu verbessern, insbesondere Sackbildung und Streuschäden beim Entleeren zu vermeiden. Zudem soll eine Entleerung auch bei flach, d.h. waagrecht, gelagerten Hagelschutznetzen (d.h. welche nur wenig durchhängen) effektiv erfolgen können. Im Weiteren ist es Aufgabe der vorliegenden Erfindung eine einfachere und weniger zeitaufwendige Montageweise für Netzbahnen zu finden. Insbesondere wird eine neue Netzbahn bereitgestellt, welche sich einfach und schnell montieren lässt. Insbesondere soll ein Netz für eine Witterungsvorrichtung zur Verfügung gestellt werden, welches eine einfache und schnelle Montage erlaubt und gleichzeitig keine Nachteile bei der Entleerung von Hagelkörnern aufweist, sondern vielmehr Verbesserungen gegenüber üblicher Schutznetzbahnen zeigt.

### BESCHREIBUNG DER ERFINDUNG

Erfindungsgemäss wird die Aufgabe durch eine Schutznetzbahn für Witterungsschutzanlagen mit einer ersten Längsseite und einer zweiten Längsseite gelöst, wobei zwischen der ersten und der zweiten Längsseite eine Vielzahl von voneinander in Längsrichtung beabstandeten Entleerungsöffnungen angelegt ist. Zweckmässigerweise sind die Längsseiten im Wesentlichen einander gegenüberliegend angeordnet bzw. verlaufen im Wesentlichen parallel zueinander. Durch die Entleerungsöffnungen, welche insbesondere als Schlitze angelegt sind, können Hagelkörner vom Netz abrutschen, wodurch sich das Netz entleert. Die Anlage der Entleerungsöffnungen ist insbesondere vorteilhaft, weil dadurch eine Schutznetzbahn an den Pfeilern bzw. an deren Längsverspannung paralleler (vorzugsweise benachbarter) Pflanzungsreihen befestigt werden kann, sodass der Pflanzungsreihenzwischenraum durch die eine Schutznetzbahn von einer Pflanzungsreihe zu einer parallelen (vorzugsweise einer der benachbarten) Pflanzungsreihen überspannt wird. Es ist somit nicht nötig nachträglich Schutznetzbahnen pflanzungsreihenmittig zu verklemmen oder zu vernähen; d.h. es ist kein umständliches Fixieren zweier loser Netzbahnlängsseiten inmitten zweier benachbarter Pflanzungsreihen mehr nötig.

Die erfindungsgemässen Entleerungsöffnungen ermöglichen insbesondere eine permanenten und örtlich definierte Entleerung von Hagelkörnern. Vorzugsweise sind die Netzbahnen derart ausgestaltet, dass die Entleerungsöffnungen nach Montage möglichst in der Mitte der Fahrgasse, parallel und entlang der die Gasse flankierenden bzw. definierenden Pflanzungspfeilerreihen positioniert sind. Aufgrund der Möglichkeit, die Entleerungsöffnungen der erfindungsgemässen Schutznetzbahn genau zu positionieren, können z.B. die Positionen von Netz und gegebenenfalls darunter aufgespannter Regenschutzfolie besser aufeinander abgestimmt werden, was dazu führt, dass sichergestellt werden kann, dass keine Entleerung auf die eventuell unter dem Schutznetz aufgespannte Regenschutzfolie erfolgt. Dies hat zur Folge, dass die bei kombinierter Verwendung von Regenschutzfolie und Hagelschutznetz verstärkt auftretenden Streuschäden unterbunden werden können.

Es ist von Vorteil, dass zwischen der ersten und der zweiten Längsseite in Längsrichtung der Schutznetzbahn eine längsgerichtete, erste Verstärkung verläuft und innerhalb der längsgerichteten, ersten Verstärkung die Vielzahl von voneinander beabstandeten Entleerungsöffnungen (z.B. Schlitze) angelegt ist. Die Verstärkung stabilisiert zum einen die Entleerungsöffnungen. Zum anderen gibt die Verstärkung dem Netz genügend Festigkeit, sodass sich das Netz insbesondere für die schwimmend Verlegung über Längs- und Querverspannung eignet. Insbesondere wird durch die Verstärkung eine Faltenbildung in Längsrichtung verhindert bzw. reduziert. Eine lokale und vielfache Sackbildung bei Hagel in den Quadranten zwischen Längs- und Querverspannung (insbesondere an Stellen ohne Entleerungsöffnung) kann dadurch verhindert werden.

Die Verstärkung kann in Längsrichtung durchgehend oder intermittierend verlaufen. Bei durchgehendem Verlauf über die Länge der Netzbahn ist die Netzstruktur insbesondere bei Gewichtsüberlastung stabiler, da netzmittig potentiell weniger Schwachstellen vorhanden sind.

Zweckmässigerweise ist die Verstärkung im Zentralbereich parallel zu den Längsseiten ausgebildet.

Vorteilhafterweise sind Verstärkungen bzw. weitere Verstärkungen (z.B. eine zweite und eine dritte Verstärkung) in den längsseitigen Randbereichen (hierin auch Randverstärkungen genannt) der Schutznetzbahn, insbesondere bis zum Rand der jeweiligen längsgerichteten Seite, ausgebildet. Die Randverstärkungen sind vorzugsweise als längsgerichtete Verstärkungen ausgebildet, welche den längsseitigen Rändern der Schutznetzbahn entlang verlaufen. Derartige Verstärkungen schützen die längsgerichteten Ränder der Schutznetzbahn vor dem Ausfransen. Klammern können gut am verdichteten Netzrand angebracht werden und/oder Verbindungen durch Vernähen sind dauerhafter, wenn sie an maschendichteren Stellen erfolgen.

Zweckmässigerweise sind die Verstärkungen im Randbereich parallel zu den Längsseiten ausgebildet.

In einer bevorzugten Ausführungsform beinhaltet die Erfindung somit eine Schutznetzbahn für Witterungsschutzanlagen mit je einem Randbereich an den zwei gegenüberliegenden Längsseiten, bei welcher im Zentralbereich der Schutznetzbahn in Längsrichtung der Schutznetzbahn eine längsgerichtete, erste Verstärkung verläuft und innerhalb dieser Verstärkung (des Zentralbereichs) eine Vielzahl von voneinander beabstandeten Entleerungsöffnungen (z.B. als Schlitzöffnungen ausgelegt) angelegt ist. Optional können weitere Verstärkungen in den Randbereichen vorgesehen sein.

Die erste Verstärkung verläuft insbesondere im Zentralbereich der Schutznetzbahn zwischen den längsseitigen Randbereichen. Der Zentralbereich entspricht einem Bereich zwischen den Randbereichen, der sich vorzugsweise ungefähr mittig zwischen den Randbereichen entlang der Schutznetzbahnlängserstreckung erstreckt und der derart ausgelegt ist, dass er nach Montage ungefähr mittig einer Gasse zwischen zwei Pflanzungsreihen angelegt ist. Der Zentralbereich ist vorzugsweise (insbesondere durch Zwischenbereiche der Schutznetzbahn) von den Randbereichen beabstandet, sodass die Verstärkung im Zentralbereich vom Randbereich und gegebenenfalls von den weiteren Verstärkungen im Randbereich beabstandet ist.

Dadurch dass die Verstärkungen lokal, d.h. lediglich dort wo sie benötigt werden, vorliegen, an anderen Bereiche des Netzes jedoch nicht, kann das Gewicht der Schutznetzbahn gering gehalten werden und es können Material und Kosten gespart werden.

Es ist vorteilhaft, dass die Schutznetzbahn quer- und längs ausgerichtete Fäden beinhaltet, wobei vorzugsweise die Querfäden gleich stark wie oder stärker als die Längsfäden ausgeführt sind. Beispielsweise haben die Querfäden einen Durchmesser im Bereich von 0.30 mm bis 0.5 mm, insbesondere z.B. einen Durchmesser von 0.32 mm, 0.36 mm oder 0.40 mm; während die Längsfäden einen Durchmesser im Bereich von 0.30 mm bis 0.35 mm aufweisen, insbesondere z.B. einen Durchmesser von 0.32 mm. Dadurch können die Kräfte, welche auf die Schutznetzbahn wirken, möglichst direkt und in Querrichtung über die Randbereiche der Netzbahn auf das Stützgerüst der Witterungsschutzanlage übertragen werden. Zu beachten ist, dass bei durchmessergrösseren Fäden der Lichtverlust höher ist als bei durchmesserkleineren Fäden, was sich auf das Wachstum der Pflanzenkultur auswirkt.

Die Netzfäden sind bevorzugt aus Kunststoff, insbesondere Polyethylen hergestellt. Vorzugsweise sind die Fäden Monofil, d.h. bestehen aus einem einzelnen, Kunststofffaden, insbesondere einem einzelnen Polyethylenfaden.

Vorteilhafterweise zeichnet sich die erfindungsgemässe Schutznetzbahn dadurch aus, dass die jeweilige Verstärkung, insbesondere die Verstärkung im Zentralbereich der Schutznetzbahn, gegebenenfalls auch die Verstärkung im Randbereich der Schutznetzbahn, sich gegenüber nicht verstärkten Netzbahnbereichen durch eine höhere Maschendichte (d.h. kleinere Maschen, insbesondere durch eine höhere Dichte der Längsfäden, d.h. eine höhere Dichte der Fäden in Querrichtung) und/oder stärkere Netzfäden (insbesondere stärkere Längsfäden) auszeichnet.

Die Verstärkung zeichnet sich vorteilhafterweise dadurch aus, dass eine höhere Maschendichte aufgrund zusätzlicher Längsfäden entsteht (d.h. die Maschenweite sich in Querrichtung verringert, während diese in der Längsrichtung unverändert bleibt). Optional könnte generell oder punktuell zur weiteren Verstärkung gegebenenfalls auch in Querrichtung eine höhere Maschendichte vorliegen (z.B. durch Einweben zusätzlicher Querfäden auf zumindest der Breite der Verstärkung, welche durch erhöhte Längsfadenzahl gebildet wird).

Die Entleerungsöffnungen sind zweckmässigerweise als Schlitze ausgebildet. Dadurch können möglichst viele Hagelkörner vom Netz abgeführt werden.

Vorzugsweise sind die Schlitze um ein Vielfaches länger als die Maschen in Längsrichtung der Netzbahn (insbesondere sind die Schlitze 50 bis 150 Maschen lang). Die Breite der Schlitze (in nicht gespanntem Zustand) kann in einer vorteilhaften Ausführung z.B. so schmal sein wie eine Masche Breit ist. Eine derartig schmale, schlitzartige Entleerungsöffnung kann z.B. durch Durchtrennen von Querfäden zwischen in Längsrichtung aneinander gereihten Maschen erzeugt werden. Vorzugsweise wird an den Enden der schlitzartigen Entleerungsöffnungen in Richtung der Längsausrichtung der Schutznetzbahn ein Reissstopp (z.B. vernähte Verstärkung) zur Sicherung der Entleerungsöffnung angebracht. Der Reissstopp ist z.B. als Abnaht oder Quernaht konzipiert.

Vorzugsweise ist das Netz gewoben. Bei dieser Herstellungsart können die Entleerungsöffnungen im gleichen Arbeitsgang eingebracht werden (ohne Schnitt). Hierzu wird vorzugsweise der Querfaden ausgesetzt und verwirkt. Die Ränder der Entleerungsöffnungen ähneln einem Knopfloch, indem die Ränder der Entleerungsöffnung (ähnlich einem Knopfloch) wirkverstärkt sind.

Die Entleerungsöffnungen können alternativ durch Heissschneiden erzeugt werden. Bei diesem Verfahren werden die Quer- und Längsfäden (insbesondere einer Webware) an den Rändern der sich beim Heissschneiden bildenden Entleerungsöffnung zur Stabilisierung vorzugsweise zusätzlich verschweisst oder verwirkt.

Zwecks Stabilisierung der Entleerungsöffnungen können gegebenenfalls einige der Querfäden quer zur Längsausrichtung der Schutznetzbahn über die Entleerungsöffnungen verlaufen (die Mehrheit der Querfäden wird jedoch an der Entleerungsöffnung unterbrochen), wobei vorzugsweise der Abstand in Längsrichtung zwischen zwei Querfäden einem Vielfachen der Maschenweite angrenzender Maschen der Schutznetzbahn in Längsrichtung entspricht.

Gegebenenfalls, kann die jeweilige Verstärkung gestuft verstärkt sein, insbesondere verschiedene Verstärkungsstufen aufweisen. Das heisst, dass in Querrichtung die Verstärkung im Zentralbereich der Netzbahn zu den Entleerungsöffnungen hin (d.h. ungefähr mittig zwischen zwei benachbarten Pflanzungsreihen, und somit ungefähr mittig zur Netzbahnmitte) dichter wird und gegebenenfalls dass in Querrichtung die Verstärkung im Randbereich zum Seitenrand hin dichter wird. Dichter bedeutet in diesem Zusammenhang z.B. dass mehr Längsfäden eingezogen sind als an anderer Stelle.

In Weiteren wird die Aufgabe erfindungsgemäss gelöst durch eine Witterungsschutzvorrichtung mit Schutznetz beinhaltend Reihen (insbesondere parallele Reihen) regelmässig beabstandeter Pfeiler, wobei die Pfeiler einer Reihe über eine Längsverspannung miteinander verbunden sind und die Pfeiler angrenzender Reihen mit dem jeweils nächsten Pfeiler der angrenzenden Reihe über eine Querverspannung verbunden sind, welche Witterungsschutzvorrichtung sich dadurch auszeichnet, dass (a) Schutznetzbahnen entlang der Reihen die Reihenzwischenräume überbrückend aufgespannt werden können bzw. aufgespannt sind und dabei die längsgerichteten Seiten einer Schutznetzbahnen an den Pfeilern und/oder den Längsverspannungen zweier benachbarter Reihen befestigt sind, (b) eine Schutznetzbahn (insb. im zentralen Bahnbereich) eine Vielzahl von voneinander beabstandeten, in Längsrichtung der Schutznetzbahn aufgereihte Entleerungsöffnungen (Löcher) aufweist, und (c) im montierten Zustand die Vielzahl von voneinander beabstandeten Entleerungsöffnungen (Löcher) einer Schutznetzbahn zentral (d.h. ungefähr mittig) zwischen zwei Pfeilerreihen der Witterungsschutzvorrichtung in Längsrichtung der Schutznetzbahn angeordnet werden kann bzw. angeordnet ist.

Zweckmässigerweise ist die Schutznetzbahn mit zumindest einer Verstärkung ausgestattet, welche in Längsrichtung der Schutznetzbahn verläuft, und innerhalb dieser Verstärkung die Vielzahl von voneinander beabstandeten Entleerungsöffnungen (Löcher, Schlitze) angelegt ist. Insbesondere verläuft die Schutznetzbahn, im Bereich zwischen den Randbereichen, d.h. in einem Zentralbereich der Schutznetzbahn.

Erfindungsgemäss sind die Schutznetzbahnen und/oder die Entleerungsöffnungen sind derart angelegt, dass sich die Entleerungsöffnungen zur selbsttätigen Entleerung des Schutznetzes eignen.

Ein erfindungsgemässes Verfahren zur Montage eines Schutznetzes (welches aus einer Vielzahl der erfindungsgemässen Schutznetzbahnen aufgebaut ist) auf einer Witterungsschutzvorrichtung beinhaltend die Schritte
- Aufstellen von parallelen, beabstandeten Pfeilerreihen, wobei die Abstände der Pfeilerreihen Pfeilerreihenzwischenräume definieren,
- Anbringen von Spannseilen für eine Längsverspannung, um die Pfeiler einer Pflanzungsreihe mittels längsgerichteter Spannseile in einer ersten Richtung zu verbinden,
- optional Anbringen von Spannseilen für eine Querverspannung, um diese quer zur ersten Richtung mittels quergerichteter Spannseile zu verbinden,
- gegebenenfalls Verspannen und Fixieren der Spannseile in Längsrichtung (und falls Querverspannungen vorhanden sind in Querrichtung) mittels geeigneter Klemmelemente,
- Anbringen der erfindungsgemässen Schutznetzbahnen,
   dadurch gekennzeichnet, dass
- die erste Längsseite einer Schutznetzbahn an Pfeilern und/oder an der Längsverspannung einer Pfeilerreihe befestigt wird,
- die zweite Längsseite der Schutznetzbahn an Pfeilern und/oder an der Längsverspannung einer parallelen, bevorzugt einer benachbarten, Pfeilerreihe befestigt wird, sodass die Schutznetzbahn zumindest den Pfeilerreihenzwischenraum über-spannt.

Bevorzugt ist, dass ein längsseitiger Randbereich (bzw. ein Teilbereich davon) der ersten und/oder der zweiten Längsseite der Schutznetzbahn die entsprechende Pfeilerreihe, an welcher die Schutznetzbahn befestigt ist, derart überragt bzw. durchbricht, sodass der längsseitige Randbereich der Schutznetzbahn den längsseitigen Randbereich einer benachbarten Schutznetzbahn zumindest teilweise überdacht (d.h. dass in vertikaler Richtung gesehen eine Schutznetzbahn die nächste Schutznetzbahn längsseitig überlappt). Hierdurch wird gewährt, dass insbesondere über der Pflanzungsreihe am Anschluss der beiden parallelen Schutznetzbahnen keine Lücke entsteht, d.h. die Netzbahnen dichtend geschlossen sind.

Zusätzliche Vorteile und Ziele der vorliegenden Erfindung ergeben sich aus der nachfolgenden Beschreibung.

### KURZBESCHREIBUNG DER FIGUREN

Nachfolgend wird die Erfindung unter Bezugnahme auf die Figuren in schematischer Darstellung näher beschrieben. Weitere bevorzugte Ausführungen der Erfindung ergeben sich aus der nun folgenden Beschreibung eines Ausführungsbeispiels anhand der Figuren. Genannte bevorzugte Merkmale können in beliebiger Kombination verwirklicht werden - soweit sie sich nicht gegenseitig ausschliessen. Es zeigen schematisch, in nicht massstabsgetreuer Darstellung:
- Fig.1: Netzbahnabschnitt mit längsgerichteten Schlitzöffnungen und Zentralbereichsverstärkung um die Schlitzöffnungen in Längsrichtung vorzugsweise durchgehend und Randbereichsverstärkungen;
- Fig. 2: Netzbahnausschnitt (aus A der Fig. 1) mit längsgerichteten Schlitz-öffnungen für die Netzentleerung bei Hagelschlag;
- Fig. 3: Netzbahnausschnitt (aus B der Fig. 1) mit Randbereichsverstärkung zur Befestigung von Plaketten und/oder Klammern;

### DETAILIERTE BESCHREIBUNG DER FIGUREN

Im Folgenden stehen gleiche Bezugsziffern für gleiche Elemente in unterschiedlichen Figuren.

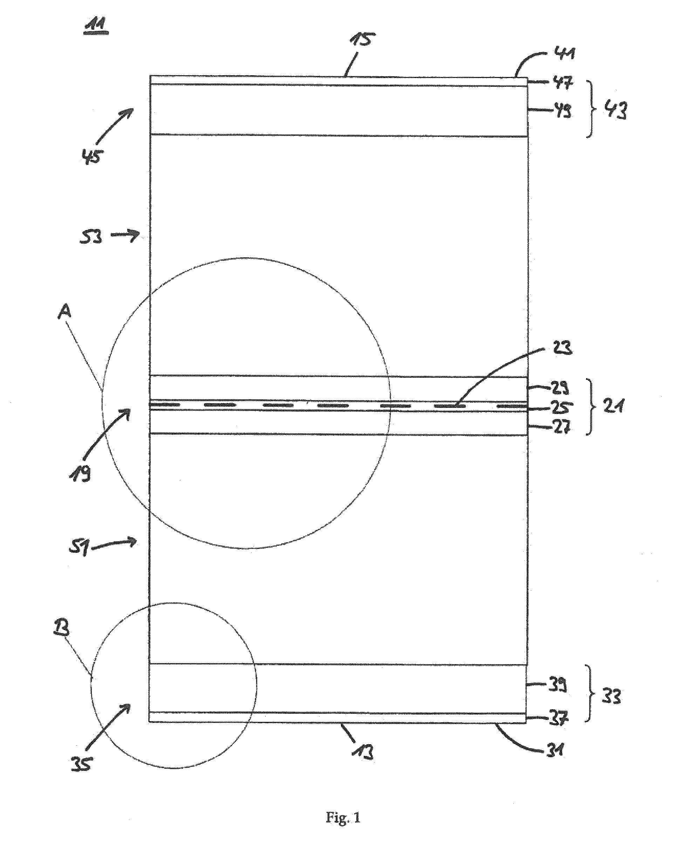

Fig. 1 zeigt einen Abschnitt einer erfindungsgemässe Schutznetzbahn 11, wobei der Abschnitt von der einen Längsseite 13 zur anderen Längsseite 15 die gesamte Quererstreckung einer Schutznetzbahn zeigt. In Längsrichtung ist lediglich ein kurzer Abschnitt der Längserstreckung gezeigt. In der Anwendung ist das Schutznetz zweckmässigerweise um ein vielfaches Länger als breit. Tatsächlich kann die Längserstreckung z.B. bis 500 Meter betragen, während die Quererstreckung üblicherweise lediglich ungefähr 2 bis 6, vorzugsweise 3 bis 5 Meter bemisst, da diese ungefähr dem Abstand benachbarter, paralleler Pflanzungsreihen entspricht bzw. gegebenenfalls etwas breiter als der Abstand der Pflanzungsreihen ist.

Im Zentralbereich 19 der Schutznetzbahn (welcher ungefähr mittig zwischen den Längsseiten 13 und 15 liegt) befindet sich eine Netzverstärkung 21, welche sich parallel zu den Längsseiten 13 und 15 erstreckt. Diese zentrale Netzverstärkung 21 ist vorzugsweise als Band ausgeführt, welches sich über die Länge (bzw. über die im Wesentlichen gesamte Länge) der Schutznetzbahn erstreckt. Innerhalb der Netzverstärkung 21, vorzugsweise mittig der Netzverstärkung 21, sind schlitzartige Entleerungsöffnungen 23, welche sich in Längsrichtung der Schutznetzbahn 11 erstrecken und gegeneinander beabstandet aneinander gereiht sind. Die Netzverstärkung 21 kann in Querrichtung ein oder mehrstufig ausgeführt sein. Die hier gezeigte Netzverstärkung 21 weist in Querrichtung drei Verstärkungsstufen auf; eine mittige Verstärkungsstufe 25 die Schlitzöffnungen 23 einschliessend und zwei äussere Verstärkungsstufen 27 und 29 entlang der mittigen Verstärkungsstufe 25 und an diese angrenzend. In Längsrichtung ist im Wesentlichen keine Stufung der Verstärkung nötig bzw. gezeigt.

In Quererstreckung weist die erfindungsgemässe Schutznetzbahn einen ersten längsseitigen Rand 31 auf. Eine erste Randverstärkung 33 erstreckt sich im Randbereich 35 entlang der ersten Längsseite 13. Vorzugsweise ist die Randverstärkung 33 als Band ausgeführt, welches sich bevorzugt über die Länge (bzw. über die im Wesentlichen gesamte Länge) der Schutznetzbahn erstreckt. Die Randverstärkung 33 kann in Querrichtung ein oder mehrstufig ausgeführt sein. Die hier gezeigte erste Randverstärkung 33 weist in Querrichtung zwei unterschiedliche Verstärkungsstufen auf; eine äussere Verstärkungsstufe 37 und eine innere Verstärkungsstufe 39. In Längsrichtung ist die Verstärkung vorzugsweise im Wesentlichen gleichmässig, d.h. es ist keine Stufung der Verstärkung nötig bzw. gezeigt.

Im Weiteren weist die erfindungsgemässe Schutznetzbahn einen zweiten längsseitigen Rand 41 auf. Eine zweite Randverstärkung 43 erstreckt sich im zweiten Randbereich 45 entlang der zweiten Längsseite 15. Diese zweite Randverstärkung 43 ist vorzugsweise ebenfalls als Band ausgeführt, welches sich weiter bevorzugt über die Länge (insb. über die im Wesentlichen gesamte Länge) der Schutznetzbahn erstreckt. Die Randverstärkung 43 kann auch hier in Querrichtung ein oder mehrstufig ausgeführt sein. Die hier gezeigte zweite Randverstärkung 43 weist in Querrichtung zwei unterschiedliche Verstärkungsstufen auf; eine äussere Verstärkungsstufe 47 und eine innere Verstärkungsstufe 49. In Längsrichtung ist die Verstärkung vorzugsweise im Wesentlichen gleichmässig, d.h. es ist keine Stufung der Verstärkung nötig bzw. gezeigt.

Die Bereiche der Schutznetzbahn zwischen dem ersten Randbereich 35 und dem Zentralbereich 19 sowie zwischen dem zweiten Randbereich 45 und dem Zentralbereich 19, im Weiteren erster Zwischenbereich 51 und zweiter Zwischenbereich 53 genannt, sind wie hier dargestellt flächenmässig vorzugsweise grösser als die Verstärkungsbereiche zusammen genommen.

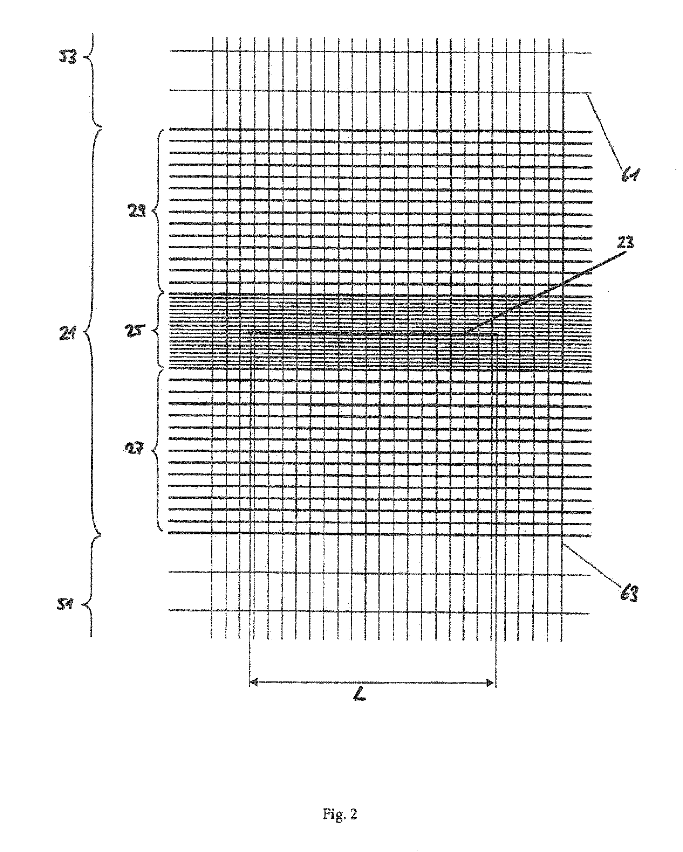

Fig. 2 zeigt einen Netzbahnausschnitt (zum Beispiel aus dem entsprechend umkreisten Gebiet in Fig. 1; Zentralbereich 19) mit einer längsgerichteten Schlitzöffnung 23 für die Netzentleerung bei Hagelschlag. Die Netzbahn besteht aus einem Netz mit Längsfäden 61 und Querfäden 63, welche bevorzugt rechtwinklig zueinander angeordnet sind. Die Längsfäden 61 verlaufen in Längsrichtung der Schutznetzbahn während die Querfäden 63 in Querrichtung der Schutznetzbahn verlaufen. Die Netzverstärkung 21 zeichnet sich in Querrichtung durch eine engere Maschenweite der Netzbahn aus als in den Zwischenbereichen 51 und 53. Die zentrale Netzverstärkung 21 ist zweckmässigerweise unterteilt in die innere Verstärkungsstufe 25 und die anschliessenden äusseren Netzverstärkungsstufen 27 und 29 rechts und links der inneren Verstärkungsstufe 25. Die Maschenweite der inneren Verstärkungsstufe 25 in Querrichtung der Netzbahn ist typischerweise kleiner als jene der äusseren Verstärkungsstufen 27 und 29. Zum Beispiel entspricht die Länge einer Maschenweite in Querrichtung im Zwischenbereich 51, 53 ungefähr der Länge von zwei oder mehr, vorzugsweise von drei oder mehr, Maschenweiten im verstärkten Zentralbereich 19. Die Maschenweite in Querrichtung der Netzbahn der inneren Verstärkungsstufe 25 ist zweckmässigerweise enger als jene der äusseren Verstärkungsstufen 27, 29. Dies gilt insbesondere in Querrichtung der Netzbahn.

Während die innere Verstärkungsstufe 25 vorwiegend die Schlitze 23 stabilisiert, tragen die äusseren Verstärkungsstufen 27 und 29 insbesondere dazu bei, das Netz, d.h. den Zentralbereich 19 der Schutznetzbahn 11 bei übermässigem Hagelschlag vor Schäden durch Gewichtsüberlastung zu schützen.

Die längsgerichtete Schlitzöffnung gestaltet sich z.B. derart, dass mehrere in Längsrichtung aufeinander folgende Maschen (z.B. 15-30 Maschen) durch Trennung ihrer Querfäden zur Schlitzöffnung vereint sind. Eine Schlitzöffnung ist vorzugsweise 200 mm bis 1000 mm, vorzugsweise 300 bis 700 mm, insbesondere ungefähr 400 mm, lang. Die Schlitzöffnung befindet sich innerhalb, vorzugsweise mittig, der zentralen Verstärkung 21, gegebenenfalls innerhalb, vorzugsweise mittig, der inneren Verstärkungsstufe 25.

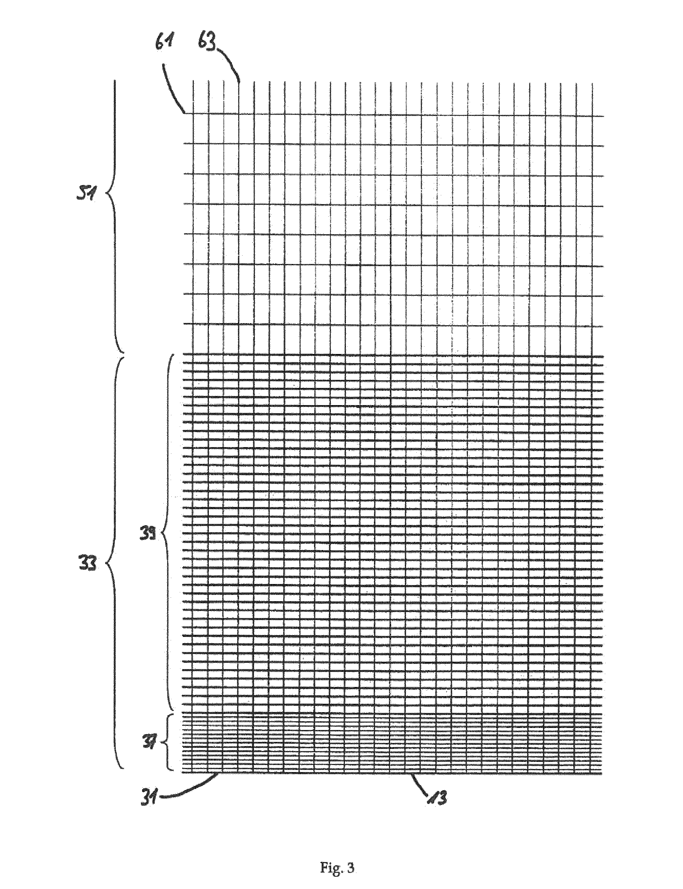

Figur 3 zeigt einen Netzbahnausschnitt (zum Beispiel aus dem entsprechend umkreisten Gebiet in Fig. 1, Randbereich 35) mit Randverstärkung 33. Ähnlich der Verstärkung im Zentralbereich 19 geht die relative weite Masche des Zwischenbereichs 51 in eine engere Masche im verstärkten Randbereich 35 über. Dabei wird die Maschenweite in Querrichtung der Netzbahn zum Rand 31 hin (gegebenenfalls stufenweise) geringer.

Die Netzrandverstärkung 33 ist zweckmässigerweise unterteilt in die innere Verstärkungsstufe 39 und die anschliessende äusseren Verstärkungsstufe 37. Die Maschenweite der inneren Verstärkungsstufe 39 in Querrichtung der Netzbahn ist typischerweise grösser als jene der äusseren Verstärkungsstufe 37. Zum Beispiel entspricht die Länge einer Maschenweite in Querrichtung im Zwischenbereich 51 ungefähr der Länge von zwei oder mehr, vorzugsweise von drei oder mehr, Maschenweiten im verstärkten Randbereich 35. Die Maschenweite in Querrichtung der Netzbahn der äusseren Verstärkungsstufe 37 ist zweckmässigerweise enger als jene der inneren Verstärkungsstufe 39. Dies gilt insbesondere in Querrichtung der Netzbahn.

Nachfolgend wird die Erfindung anhand von Beispielen zur Montage erläutert.

### BEISPIELE:

Im Folgenden wird eine Montage eines Witterungsschutznetzes zwecks Hagelschutzes (d.h. einer Netzanlage) demonstriert. Die Montage von Stützgerüst und Netz kann vorzugsweise in zwei Schritten erfolgen, d.h. die Montage des Stützgerüstes kann unabhängig von der Montage des Netzes ablaufen und abgeschlossen werden bevor das Netz angebracht wird.

Die Netzmontage (Vorzugsweise anschliessend an den Aufbau eines Stützgerüstes mit zumindest Längsverspannung der Pfeiler über den Pflanzungsreihen):
Das Schutznetz wird von einer Seite einer Pflanzungsreihe her an einer seiner Längsseiten an den Anlagepfeilern einer Pflanzungsreihe befestigt, und zwar vorzugsweise derart, dass das Netz um einige Zentimeter (z.B. um mindestens 20 cm) auf die andere Seite der Pflanzungsreihe ragt. Das Netz wird vorzugsweise zur Sicherung zusätzlich mit Montageclips zwischen den aufeinander folgenden Pfeilern an deren Längsverspannung (z.B. in Abständen von zwei Metern) befestigt.

Die zweite Längsseite wird vorzugsweise an der Längsverspannung der benachbarten Pflanzungsreihe oder einem dazu parallelen Zusatzdraht der benachbarten Pflanzungsreihe eingehängt.

Dadurch überspannt die Schutznetzbahn den Zwischenraum zwischen zwei benachbarten Pflanzungsreihen von Pflanzungsreihe zu Pflanzungsreihe und benötigt kein Vernähen zentral, d.h. ungefähr mittig, zwischen zwei Pflanzungsreihen.

Durch das Überlappen einer Netzbahn über die Längsverspannung genügt es die nächste benachbarte Netzbahn lediglich unter dem Überlapp anzuhängen. Die Netzbahn kann, muss aber nicht, mit der Nachbarbahn vernäht werden.

Die erfindungsgemässe Schutznetzbahn eignet sich insbesondere für schwimmend verlegte Netze, welche vorzugsweise über der Längsverspannung sowie über der Querverspannung liegen, wobei die Netzausbreitung typischerweise flach ist (d.h. dass das Netz zwischen den Verspannungen im Wesentlichen kaum durchhängt und somit die Neigung zum Entleerungsschlitz hin relativ gering ist).

Vorteile des neuen, erfindungsgemässen Netzes und der neuen, erfindungsgemässen Montagetechnik zur Netzbefestigung sind eine einfache Montage und ein schneller Austausch bei Reparaturen und Netzerneuerung und nicht zuletzt ein einfaches und schnelles Abdecken und Wiederbedecken der Bepflanzung während das Netz auf der Witterungsschutzanlage bleibt.

Die erfindungsgemässe Schutznetzbahn eignet sich insbesondere für den Schutz von Kern- und Steinobst, d.h. z.B. Äpfel, Birnen, Pfirsiche und Kirschen.

### BEZUGSZEICHENLISTE:

- 11: Schutznetz
- 13: erste Längsseite (auch längsgerichtete Seite) des Schutznetzes
- 15: zweite Längsseite (auch längsgerichtete Seite) des Schutznetzes
- 19: Zentralbereich
- 21: Verstärkung, insb. zentrale oder erste (Netz-)Verstärkung
- 23: Entleerungsöffnung, insbesondere als Schlitzöffnung ausgeführt
- 25: innere Verstärkungsstufe des Zentralbereichs
- 27: erste äussere Verstärkungsstufe des Zentralbereichs
- 29: zweite äussere Verstärkungsstufe des Zentralbereichs
- 31: erster längsseitiger Rand
- 33: Verstärkung, insb. erste (Netz-)Randverstärkung
- 35: erster Randbereich
- 37: äussere Verstärkungsstufe der ersten (Netz-)Randverstärkung
- 39: innere Verstärkungsstufe der ersten (Netz-)Randverstärkung
- 41: zweiter längsseitiger Rand
- 43: Verstärkung, insb. zweite (Netz-)Randverstärkung
- 45: zweiter Randbereich
- 47: äussere Verstärkungsstufe der zweiten (Netz-)Randverstärkung
- 49: innere Verstärkungsstufe der zweiten (Netz-)Randverstärkung
- 51: erster Zwischenbereich
- 53: zweiter Zwischenbereich
- 61: Längsfaden (z.B. Warp Monofilament 0.32)
- 63: Querfaden (z.B. Weave Monofilament 0.36 oder 0.40)

## Patentansprüche

1. Schutznetzbahn für Witterungsschutzanlagen mit einer ersten Längsseite (13) und einer zweiten Längsseite (15),
**dadurch gekennzeichnet, dass** zwischen der ersten und der zweiten Längsseite (13, 15) in Längsrichtung der Schutznetzbahn eine längsgerichtete Verstärkung (21) verläuft und innerhalb der längsgerichteten Verstärkung eine Vielzahl von voneinander in Längsrichtung beabstandeten Entleerungsöffnungen (23) angelegt ist.

2. Schutznetzbahn nach einem der vorangehenden Ansprüche, **dadurch gekennzeichnet, dass** Verstärkungen bzw. weitere Verstärkungen (33,43) in längsseitigen Randbereichen, insbesondere bis zum Rand der jeweiligen längsgerichteten Seite, ausgebildet sind.

3. Schutznetzbahn nach einem der vorangehenden Ansprüche, **dadurch gekennzeichnet, dass** die Schutznetzbahn quer- und längs ausgerichtete Fäden (63, 61) beinhaltet, wobei die Querfäden vorzugsweise gleich stark wie oder stärker als die Längsfäden ausgeführt sind.

4. Schutznetzbahn nach einem der vorangehenden Ansprüche, **dadurch gekennzeichnet, dass** die jeweilige Verstärkung (21,33,43) insbesondere die Verstärkung (21) im Zentralbereich, gegebenenfalls auch die Verstärkung (33, 43) im Randbereich sich durch eine höhere Maschendichte, insbesondere in Querrichtung der Netzbahn, und/oder stärkere Netzfäden, insbesondere stärkere Längsfäden, auszeichnet.

5. Schutznetzbahn nach einem der vorangehenden Ansprüche, **dadurch gekennzeichnet, dass** die Entleerungsöffnungen (23) als Schlitze ausgebildet sind.

6. Schutznetzbahn nach dem vorangehenden Anspruch, **dadurch gekennzeichnet, dass** die Schlitze um ein Vielfaches länger sind als die Maschen in deren Längsrichtung.

7. Schutznetzbahn nach einem der vorangehenden Ansprüche, **dadurch gekennzeichnet, dass** die Entleerungsöffnungen an den beiden Enden in Richtung der Längsausrichtung der Schutznetzbahn mit einem Reissstopp gesichert sind, wobei der Reissstopp, z.B. als Abnaht oder Quernaht konzipiert ist

8. Schutznetzbahn nach einem der vorangehenden Ansprüche 3-7, **dadurch gekennzeichnet, dass** einige der Querfäden quer zur Längsausrichtung der Schutznetzbahn über die Entleerungsöffnungen verlaufen, wobei vorzugsweise der Abstand in Längsrichtung zwischen zwei Querfäden einem Vielfachen der Maschenweite angrenzender Maschen der Schutznetzbahn in Längsrichtung entspricht.

9. Schutznetzbahn nach einem der vorangehenden Ansprüche, **dadurch gekennzeichnet, dass** die jeweilige Verstärkung (21, 33, 43) gestuft verstärkt ist, insbesondere verschiedene Verstärkungsstufen (25, 27, 29, 37, 39, 47, 49) aufweist.

10. Witterungsschutzvorrichtung mit Schutznetz beinhaltend Reihen regelmässig beabstandeter Pfeiler, wobei die Pfeiler einer Reihe über eine Längsverspannung miteinander verbunden sind und die Pfeiler angrenzender Reihen mit dem jeweils nächsten Pfeiler der angrenzenden Reihe über eine Querverspannung verbunden sind, **dadurch gekennzeichnet, dass**
- Schutznetzbahnen entlang der Reihen die Reihenzwischenräume überbrückend aufgespannt werden können bzw. aufgespannt sind und dabei die längsgerichteten Seiten einer Schutznetzbahnen an den Pfeilern und/oder den Längsverspannungen zweier benachbarter Reihen befestigt sind,
- eine Schutznetzbahn mit längsgerichteter Verstärkung (21) innerhalb der längsgerichteten Verstärkung eine Vielzahl von voneinander beabstandeten, in Längsrichtung der Schutznetzbahn aufgereihte Entleerungsöffnungen aufweist, und
- im montierten Zustand die Vielzahl von voneinander beabstandeten Entleerungsöffnungen (23) einer Schutznetzbahn zentral zwischen zwei Pfeilerreihen der Witterungsschutzvorrichtung in Längsrichtung der Schutznetzbahn angeordnet werden kann bzw. angeordnet ist.

11. Witterungsschutzvorrichtung nach dem vorangehenden Anspruch 10, **dadurch gekennzeichnet, dass** die Schutznetzbahnen und/oder die Entleerungsöffnungen derart angelegt sind, dass sich die Entleerungsöffnungen (23) zur selbsttätigen Entleerung des Schutznetzes eignen.

12. Verfahren zur Montage eines Schutznetzes auf einer Witterungsschutzvorrichtung beinhaltend die Schritte:
- Aufstellen von parallelen Pfeilerreihen, wobei die in Abstände der Pfeilerreihen Pfeilerreihenzwischenräume definieren,
- Anbringen von Spannseilen für eine Längsverspannung, um die Pfeiler einer Pflanzungsreihe mittels längsgerichteter Spannseile in einer ersten Richtung zu verbinden,
- Aufziehen von Schutznetzbahnen nach einem der Ansprüche 1-9,
**dadurch gekennzeichnet, dass**
- die erste Längsseite einer Schutznetzbahn an Pfeilern und/oder an der Längsverspannung einer Pfeilerreihe befestigt wird,
- die zweite Längsseite der Schutznetzbahn an Pfeilern und/ oder an der Längsverspannung einer parallelen, bevorzugt einer benachbarten, Pfeilerreihe befestigt wird, sodass die Schutznetzbahn den Pfeilerreihenzwischenraum überspannt.

13. Verfahren nach dem vorhergehenden Anspruch 12, **dadurch gekennzeichnet, dass** ein längsseitiger Randbereich (35,45) der ersten und/oder der zweiten Längsseite (13,15) der Schutznetzbahn die entsprechende Pfeilerreihe derart überragt oder durchbricht, sodass der längsseitige Randbereich (35, 45) der Schutznetzbahn den längsseitigen Randbereich einer benachbarten Schutznetzbahn überdacht.
